# EUROPEAN PATENT SPECIFICATION

(11) **EP 4 463 750 B1**
(45) Date of publication and mention of the grant of the patent: **06.08.2025**
(21) Application number: 23700367.8
(22) Date of filing: 10.01.2023
(51) Int. Cl.: G05D 1/00

(54) **METHOD FOR IMPLEMENTING A SYSTEM FOR TRANSPORTING PRODUCTS AS WELL AS SAID SYSTEM PER SE**
VERFAHREN ZUR IMPLEMENTIERUNG EINES SYSTEMS ZUM TRANSPORT VON PRODUKTEN SOWIE BESAGTES SYSTEM AN SICH
PROCÉDÉ DE MISE EN OEUVRE D'UN SYSTÈME DE TRANSPORT DE PRODUITS AINSI QUE LEDIT SYSTÈME PER SE

(30) Priority: 13.01.2022 NL 2030519
(43) Date of publication of application: 20.11.2024
(73) Proprietor: Vanderlande Industries B.V., 5466 RB Veghel (NL)
(72) Inventor: VAN EEKELEN, Jozef Antonius Wilhelmus Maria, 5466 RB Veghel (NL); FRANSEN, Karlijn Johanna Catharina, 5466 RB Veghel (NL)
(74) Representative: Algemeen Octrooi- en Merkenbureau B.V.
(86) International application number: PCT/NL2023/050007
(87) International publication number: WO 2023/136719

(56) References cited:
- EP-B1- 3 253 692
- WO-A1-2020/197383
- US-A1- 2013 302 132
- US-A1- 2019 176 328

## Description

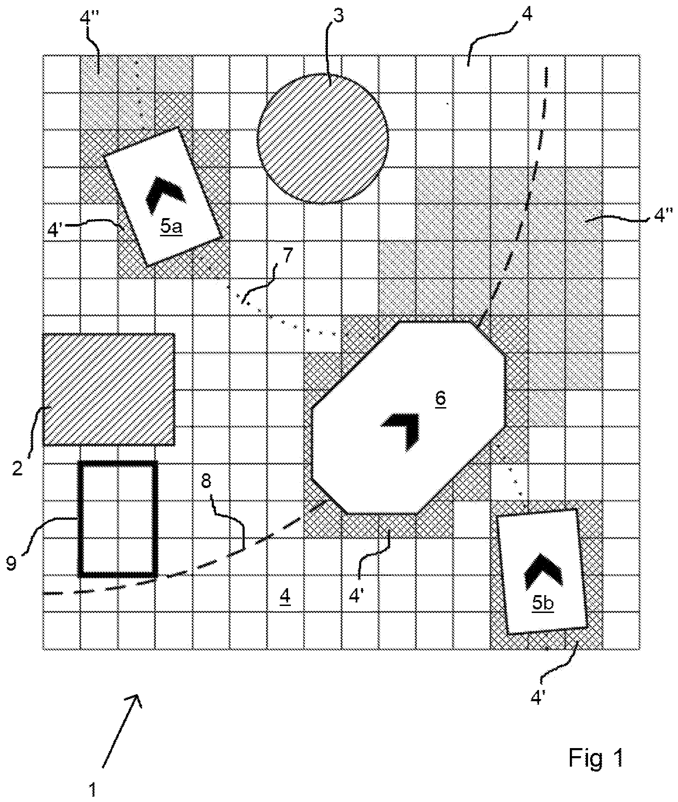

The present invention relates to transport of products. It is known in logistics systems to make use of several vehicles, wherein each vehicle is configured to move over a floor within a movement area. The vehicles are each arranged for carrying at least one product, for example for the purpose of sorting operations. A system of this kind comprises a central control server that is arranged for driving vehicles so that they move within the movement area according to movement paths defined by the control server, wherein products are transported. For this purpose the control server comprises a digital representation of the movement area. This representation comprises a plurality of virtual tiles joined together. These tiles form, for the central control server, the starting point for determining the movement paths, wherein the movement paths in determination thereof by the central control server are defined by a list of the tiles that will be occupied successively by the respective vehicle on travelling along the movement path. For an illustration of these movement paths, reference may be made to Figs. 1 and 6 of WO 2020/197383 A1, in which it can clearly be seen how the movement paths shown there follow the hexagonal structure of the tiles used therein.

In known systems, the tiles also serve for preventing collisions between vehicles. In that case the control server takes as the starting point that a tile may only be occupied by a vehicle that travels along a movement path defined for the vehicle, if this tile is (temporarily) reserved for that vehicle. It is not possible to reserve a tile at the moment when this tile is occupied by another vehicle or is already reserved for another vehicle. In certain systems it may also be that a tile is not available to be reserved, for example in order to prevent a deadlock situation arising or to limit the density of vehicles in a certain part of the movement area, even if the tile in question is not at that moment occupied by another vehicle or is not reserved for another vehicle. In particular, as the density of vehicles within a movement area increases, the risk of this kind of deadlock situation arising also increases. A deadlock situation is a situation in which a number of vehicles are unable to continue on their respective movement paths because they would be in each other's way if they were to continue on their respective movement paths. In a deadlock situation there is always a so-called circular waiting state wherein each vehicle of a group of vehicles would have to reserve a tile in order to be able to continue on its movement path, which is already reserved for another vehicle of that group. A deadlock situation of this kind would also include a situation in which two vehicles are opposite each other and their respective movement paths are directed toward each other.

European patent EP 3253692 B1 discloses a goods handling system. In use of this system vehicles transport racks to an operator station. At least a portion of a transportation path is transmitted to the vehicle and locations of the vehicle along the transportation path are monitored based on marker information that is detected by the vehicle. The markers are located at predetermined positions. A method according to the preamble of claim 1 and a system according to the preamble of claim 11 is known from EP 3253692 B1.

The invention aims to provide a method for implementing a system for transporting products that can be applied with increased efficiency. For this purpose the invention firstly provides a method as claimed in claim 1. According to the present description, the central control server can be implemented both in hardware and in software; in hardware because the functionality is for example implemented in a Field Programmable Gate Array, FPGA, or an Application Specific Integrated Circuit, ASIC; in software because the functionality is for example carried out by one or more Central Processing Units, CPUs, microcontrollers, or something similar. The central server may be a standalone server, a cloud implemented server, a distributed server or processing sources in a data center. The word "next" in the phrase "next tile" expresses that it concerns one or at least one tile not yet reserved for the vehicle in question, which adjoins the or a first tile that is already reserved for that vehicle or that is occupied by that vehicle, to allow the vehicle to travel along the movement path that the central control server has defined for that vehicle.

The invention is based on the understanding that the application of tiles may admittedly be very useful and effective for preventing collisions and possible deadlock situations, but that if, when determining the movement paths, no use is made of the tiles, the efficiency of the system may increase. By defining movement paths independently of the tiles, there is in principle an increased degree of freedom for the central control server to determine the movement paths, so that for example a straight line may be selected between two points within the movement area as (part of a) movement path even if this straight line does not fit in the structure of the tiles used. In the case of square tiles of equal size, said tiles defining two principal directions that are oriented perpendicular to each other, it can for example easily be recognized that for movement of a vehicle along the two catheti of a right-angled triangle, extending parallel to the respective principal directions, it is possible to choose to follow the hypotenuse of the triangle, wherein the length of the hypotenuse and thus of the path to be travelled by the vehicle is by definition less than the sum of the lengths of the other two sides. Despite this greater freedom for defining efficient movement paths, in the invention the tiles can be used effectively for prevention of collisions between vehicles and optionally for prevention of deadlock situations in a manner that is already familiar to a person skilled in the art.

The advantages of the invention may in particular be under discussion if at least two vehicles of the plurality of vehicles differ from one another with regard to shape and/or size and/or the drive devices or drive units thereof and/or the control devices or control units thereof. There is then said to be a heterogeneous fleet of vehicles. The vehicles will differ from one another with regard to their movement behavior, for example with regard to their maximum speed, their maximum acceleration/deceleration, the radius of curvature of bends that they may encounter and/or the space that they take up. Thus, it may be that the respective movement paths between points A and B as determined by the central control server differ by type of vehicle.

If the shape and dimensions of at least one tile, preferably of the greatest proportion of the number of tiles, more preferably of all tiles, is such that at least one of the vehicles, preferably each vehicle, does not fit within the perimeter of the at least one tile, a fine-meshed system is obtained, so that it can be established more accurately whether collisions or deadlock situations are likely to arise, and so that the chance of that occurring is in principle smaller, so that the system can be applied more efficiently.

In order to be able to anticipate local situations within the movement area and make efficient use of the available computing power of the central control server, it may be preferable that at least two tiles of the plurality of tiles differ from one another with regard to shape and/or size. Thus, for example, in practice for relatively busy parts of the movement area it may be preselected to use smaller tiles than in relatively calm parts of the movement area. Furthermore, the shape of the tiles may be adapted to the available space. In a long narrow passageway where vehicles cannot pass each other it may for example be chosen to use a tile whose shape and size matches that of the passageway, although it may also be chosen to divide said passageway into a larger number of tiles so that vehicles can follow each other relatively closely in a passageway of this kind.

The aforementioned advantages may also be under discussion if two tiles that differ from one another with regard to shape and/or size do not adjoin an edge of the movement area, where for geometric reasons it may be that tiles are preselected that differ with regard to their shape or size from tiles that do not adjoin an edge of the movement area.

In particular, to promote smooth and efficient movement of vehicles along their movement paths, in one embodiment the method may advantageously comprise the steps of
- receiving or generating, by the central control server, a request for carrying out a next step to reserve several successive tiles in the movement path determined for the vehicle,
- at least on condition that it has been determined by the control server that the plurality of successive tiles are available, reserving, by the control server, the plurality of successive tiles for the vehicle and then movement of the vehicle along the movement path determined for the vehicle so that the plurality of successive tiles are occupied.

This embodiment could also find useful application if a vehicle is located in a part of the movement area where it is less busy, so that there is relatively little likelihood of collisions or deadlock situations. This embodiment will also be rather advantageous if the tiles in the movement path are relatively small and for example so small that the vehicle in question cannot fit in them.

In a further embodiment of the method according to the invention, the central control server comprises a library of a number of path segments within the movement area and comprises the step of determining, by the central control server, a movement path for the vehicle, making use, by the central control server, of the library in such a way that the movement path is formed at least partly, preferably completely, by a single path segment or is constructed from contiguous path segments. A method of this kind offers the advantage that determination of a movement path by the central control server, for which limited computing capacity is required, can be carried out extremely efficiently, and in addition the risk of collisions or deadlock situations can be reduced effectively because movement paths that are determined for different vehicles at least partly overlap, as the same path segments are used and in these path segments the vehicles are able to move one after another.

The invention is suitable in particular for application in sorting of products. In particular, for this application it may be advantageous if the method comprises the steps of
- loading a vehicle with a product to be transported within the movement path determined for the vehicle, preferably at the starting position for the movement path, and/or
- unloading the vehicle within the movement path determined for the vehicle, preferably at the end position for the movement path.

The invention also relates to a system according to claim 11.

The advantages of this kind of application have already been explained above on the basis of the explanation of the method according to the invention.

The invention will be explained in more detail on the basis of the description of an embodiment of a method and system according to the invention, not to be interpreted as limiting the invention, referring to Fig. 1.

Fig. 1 shows a schematic top view of a part of a system according to the invention. More specifically, Fig. 1 shows a square part 1 of a movement area, with two fixed obstacles 2, 3, such as a column or rack, located within said part 1 of the movement area. The movement area is formed by a floor or at least a part thereof. The floor may be provided covered inside a building. The system further comprises a central control server, not shown in more detail, which has divided the movement area into square virtual tiles 4. These tiles 4 are thus in reality not visible or at least need not be visible. The size of the tiles 4, which on account of the nature of tiles in general have or cover an area, is such that none of the vehicles of the heterogeneous fleet fits completely within a tile 4. The tiles 4 that border on an obstacle 2, 3 have a shape that deviates from a square shape, on account of said obstacles 2, 3. It is also possible, also at a distance from the obstacles 2, 3, to represent the movement area with other than square tiles, for example with a larger tile the size of two by three tiles 4 as shown with the thickened line 9. The tiles used may also be of a size such that vehicles 5a and 5b to be designated hereunder or optionally even also vehicle 6, would each be able to fit within the perimeter of a tile of this kind.

The system further comprises a heterogeneous fleet of vehicles, with Fig. 1 showing vehicles 5a, 5b and 6 located within part 1 of the movement area. Vehicles 5a and 5b are of identical configuration and are smaller and more maneuverable than vehicle 6. Each of the vehicles 5a, 5b, 6 has a drive motor or at least arrangements by which in each case they move within the movement area as well as a carrying platform for carrying an object for example such as a parcel thereon.

The central control server and each of the vehicles 5a, 5b, 6 are configured to send and to receive wireless signals. By means of these signals, the central control server is for example able to send instructions to each of the vehicles 5a, 5b, 6, which can be received by each of the vehicles 5a, 5b, 6, at least in so far as they are intended for said vehicles 5a, 5b, 6. On the basis of these instructions, the vehicles 5a, 5b, 6 will among other things move over the movement area. The vehicles 5a, 5b, 6 may for example send information about their position within the movement area and/or about a path travelled by the vehicles within the movement area, to the central control server which is configured to receive and process this information.

During application of the system, the central control server receives orders to move a vehicle within the movement area from a starting position of that vehicle to an end position. In reaction to this, the central control server determines a movement path for the vehicle in question, said movement path extending between the aforementioned starting position and end position. Line 7 shows, at least in the part of the movement area shown in Fig. 1, overlapping parts of movement paths for vehicles 5a and 5b, while line 8 shows a part of the movement path for vehicle 6. When determining the movement paths, the central control server takes no account of the tiles 4, or the structure thereof. This is also clear from the shape and direction of lines 7 and 8 in Fig. 1, representing parts of movement paths. The central control server does take into account the boundaries of the movement area and obstacles, such as obstacles 2, 3, within the movement area. The arrows on the vehicles 5a, 5b and 6 point to the end position of the respective movement paths 7, 8 or at least in the direction of movement of the respective vehicles 5a, 5b, 6.

When determining the movement path of a vehicle, in one embodiment of the invention it is possible that the central control server has a library of a number of path segments, wherein the central control server at least partly constructs a movement path, to be determined by the central control server, from a single path segment or from a plurality of path segments, whether or not contiguous. The part of movement path 7 shown in Fig. 1 could for example be a path segment of this kind or said contiguous path segments. It is also possible or often even advantageous that the central control server is then configured to assume, when determining a movement path, that a path segment may only be travelled by a vehicle in one of two opposite directions.

On the basis of information that is available to the central control server relating to the position of each of the vehicles 5a, 5b and 6, the central control server determines which of the tiles 4 are occupied partly or completely by the vehicles 5a, 5b and 6. In so far as there is mention hereunder or there is mention in the foregoing about a tile that is occupied by a vehicle, said tile may be occupied both partly and completely. Moreover, an occupied tile is by definition also reserved. This reservation is only removed when the vehicle in question has left the tile completely.

The aforementioned occupied tiles are indicated with reference number 4' and are cross-hatched. Dotted tiles 4" indicate the tiles 4 that have been reserved by the central control server for an associated vehicle 5a, 6. Reserving of successive tiles 4 for a vehicle may take place by the central control server at the moment when that vehicle has reached the front tile(s) of the currently already reserved tiles 4 but still before said front tile/tiles 4 has/have been reached.

For vehicle 5b, (still) no tiles 4, not yet already occupied by vehicle 5b, have been reserved by the central control server, since the tile(s) 4 adjoining the present position of vehicle 5b, which on further movement of vehicle 5b along its movement path 7 would be occupied, is/are already reserved or at least is/are occupied by vehicle 6. The rules that are followed by the central control server when reserving a tile for a vehicle oppose occurrence of this kind of reservation if the respective tile(s) is/are already occupied by or is/are reserved for another vehicle. Thus, by making use of the tiles 4, collisions between vehicles of the system can be prevented in an effective manner.

The reservation of a tile 4 for a vehicle is removed by the central control server as soon as or at least shortly after the tile in question has been passed completely by the vehicle in question. A consequence of this is that as soon as vehicle 6 has moved somewhat further along its movement path 8, tiles 4 again become available for vehicle 5b, to be reserved so that vehicle 5b is able to continue its movement along movement path 7.

## Claims

1. A method for implementing a system for transporting products, said system comprising
- a plurality of vehicles (5a, 5b, 6), wherein each vehicle is configured to move over a floor within a movement area and is configured to carry at least one product to be transported;
- a central control server configured for controlling the vehicles, wherein the central control server comprises a digital representation of the movement area, said representation comprising a plurality of contiguous tiles (4, 4', 4");
in which the method comprises the steps of:
- receiving or generating, by the central control server, an order to move a vehicle within the movement area from a starting position of the vehicle to an end position,
- determining, by the central control server, in reaction to the order, independently of the tiles in accordance with the digital representation, a movement path (7, 8) for the vehicle, said movement path extending from the starting position to the end position
- after the movement path for the vehicle has been determined by the central control server, determining by the central control server which contiguous tiles will be occupied by the respective vehicle during movement by the vehicle along the movement path,
- receiving or generating, by the central control server, a request for execution of a next step by the vehicle to reserve at least one successive tile in the movement path determined for the vehicle,
- at least on condition that it has been determined by the control server that the at least one successive tile is available, reserving, by the control server, the at least one successive tile for the vehicle and then movement of the vehicle along the movement path determined for the vehicle so that the at least one successive tile is occupied,
- after a vehicle has completely passed a tile reserved for that vehicle, removing the reservation by the central control server,
**characterized in that** said tiles are virtual tiles.

2. The method as claimed in claim 1, wherein at least two vehicles of the plurality of vehicles differ from one another with regard to shape and/or size and/or the drive devices thereof and/or the control devices thereof.

3. The method as claimed in one of the preceding claims, wherein the shape and dimensions of at least one tile, preferably of the greatest proportion of the number of tiles, more preferably of all tiles, are such that at least one of the vehicles, preferably each vehicle, does not fit within the perimeter of the at least one tile.

4. The method as claimed in one of the preceding claims, wherein at least two tiles of the plurality of tiles differ from one another with regard to shape and/or size.

5. The method as claimed in claim 4, wherein two tiles that differ from one another with regard to shape and/or size do not adjoin an edge of the movement area.

6. The method as claimed in one of the preceding claims, comprising
- receiving or generating, by the central control server, a request for carrying out a next step to reserve several successive tiles in the movement path determined for the vehicle,
- at least on condition that it has been determined by the control server that the plurality of successive tiles are available, reserving, by the control server, the plurality of successive tiles for the vehicle and then movement of the vehicle along the movement path determined for the vehicle so that the plurality of successive tiles are occupied.

7. The method as claimed in one of the preceding claims, wherein the central control server comprises a library of a number of path segments within the movement area and comprises the step of determining, by the central control server, a movement path for the vehicle, making use, by the central control server, of the library so that the movement path is formed at least partly, preferably completely, by a single path segment or is constructed from contiguous path segments.

8. The method as claimed in one of the preceding claims, wherein the method comprises the steps of
- loading a vehicle with a product to be transported within the movement path determined for the vehicle, preferably at the starting position for the movement path, and/or
- unloading the vehicle within the movement path determined for the vehicle, preferably at the end position for the movement path.

9. The method as claimed in one of the preceding claims, wherein each of the contiguous tiles having or covering an area.

10. The method as claimed in one of the preceding claims, wherein the method comprises the step of
- the central control server dividing the movement area into tiles.

11. A system for implementing a method as claimed in one of the preceding claims, comprising
- a plurality of vehicles (5a, 5b, 6), wherein each vehicle is configured to move over a floor within a movement area and is configured to carry at least one product to be transported;
- a central control server configured for controlling the vehicles, wherein the central control server comprises a digital representation of the movement area, said representation comprising a plurality of contiguous tiles (4, 4', 4");
wherein the central control server and the vehicles are further configured for
- receiving or generating, by the central control server, an order to move a vehicle within the movement area from a starting position of the vehicle to an end position,
- determining, by the central control server, in reaction to the order, independently of the tiles in accordance with the digital representation, a movement path (7, 8) for the vehicle, said movement path extending from the starting position to the end position,
- after the movement path has been determined by the central control server, determining by the central control server which contiguous tiles will be occupied by the vehicle in question during movement by the vehicle along the movement path,
- receiving or generating, by the central control server, a request for the execution of a next step by a vehicle to reserve at least one successive tile in the movement path determined for the vehicle;
- at least on condition that it has been determined by the control server that the at least one successive tile is available, reserving, by the control server, the at least one successive tile for the vehicle and then movement of the vehicle along the movement path determined by the vehicle so that the at least one successive tile is occupied,
- after a vehicle has completely passed a tile reserved for that vehicle, removing the reservation by the central control server,
**characterized in that** said tiles are virtual tiles.

12. A system according to claim 11, wherein each of the contiguous tiles has or covers an area.

13. A system according to claim 11 or 12, wherein the central control server is configured for dividing the movement area into tiles.

## Patentansprüche

1. Verfahren zur Implementierung eines Systems zum Transport von Produkten, wobei das System Folgendes umfasst
- mehrere Fahrzeuge (5a, 5b, 6), wobei jedes Fahrzeug dazu ausgelegt ist, sich über einen Boden in einem Bewegungsbereich zu bewegen, und dazu ausgelegt ist, mindestens ein zu transportierendes Produkt zu tragen;
- einen zentralen Steuerserver, der dazu ausgelegt ist, die Fahrzeuge zu steuern, wobei der zentrale Steuerserver eine digitale Darstellung des Bewegungsbereichs umfasst, wobei die Darstellung mehrere benachbarte Kacheln (4, 4', 4") umfasst;
wobei das Verfahren die folgenden Schritte umfasst:
- Empfangen oder Erzeugen, durch den zentralen Steuerserver, eines Befehls, ein Fahrzeug in dem Bewegungsbereich von einer Startposition des Fahrzeugs zu einer Endposition zu bewegen,
- Bestimmen, durch den zentralen Steuerserver, als Reaktion auf den Befehl, unabhängig von den Kacheln entsprechend der digitalen Darstellung, einer Bewegungsbahn (7, 8) des Fahrzeugs, wobei sich die Bewegungsbahn von der Startposition zur Endposition erstreckt,
- nachdem die Bewegungsbahn des Fahrzeugs vom zentralen Steuerserver bestimmt wurde, Bestimmen durch den zentralen Steuerserver, welche benachbarten Kacheln bei der Bewegung des Fahrzeugs entlang der Bewegungsbahn von dem jeweiligen Fahrzeug besetzt werden,
- Empfangen oder Erzeugen, durch den zentralen Steuerserver, einer Anfrage zur Ausführung eines nächsten Schritts durch das Fahrzeug, um mindestens eine nachfolgende Kachel in der für das Fahrzeug bestimmten Bewegungsbahn zu reservieren,
- zumindest unter der Bedingung, dass vom Steuerserver bestimmt wurde, dass die mindestens eine nachfolgende Kachel verfügbar ist, Reservieren durch den Steuerserver der mindestens einen nachfolgenden Kachel für das Fahrzeug und anschließend Bewegung des Fahrzeugs entlang der für das Fahrzeug bestimmten Bewegungsbahn, sodass die mindestens eine nachfolgende Kachel besetzt wird,
- nachdem ein Fahrzeug eine für das Fahrzeug reservierte Kachel vollständig überfahren hat, Entfernen der Reservierung durch den zentralen Steuerserver,
**dadurch gekennzeichnet, dass** die Kacheln virtuelle Kacheln sind.

2. Verfahren nach Anspruch 1, wobei sich mindestens zwei Fahrzeuge der mehreren Fahrzeuge bezüglich deren Form und/oder Größe und/oder Antriebsvorrichtungen und/oder Steuervorrichtungen voneinander unterscheiden.

3. Verfahren nach einem der vorstehenden Ansprüche, wobei die Form und Abmessungen mindestens einer Kachel, vorzugsweise des größten Anteils der Anzahl der Kacheln, weiter bevorzugt aller Kacheln, derart sind, dass mindestens eines der Fahrzeuge, vorzugsweise jedes Fahrzeug, nicht in den Umfang der mindestens einen Kachel passt.

4. Verfahren nach einem der vorstehenden Ansprüche, wobei sich mindestens zwei Kacheln der mehreren Kacheln bezüglich deren Form und/oder Größe voneinander unterscheiden.

5. Verfahren nach Anspruch 4, wobei zwei Kacheln, die sich bezüglich Form und/oder Größe voneinander unterscheiden, nicht an eine Kante des Bewegungsbereichs angrenzen.

6. Verfahren nach einem der vorstehenden Ansprüche, umfassend
- Empfangen oder Erzeugen, durch den zentralen Steuerserver, einer Anfrage zur Ausführung eines nächsten Schritts, um mehrere nachfolgende Kacheln in der für das Fahrzeug bestimmten Bewegungsbahn zu reservieren,
- zumindest unter der Bedingung, dass vom Steuerserver bestimmt wurde, dass die mehreren nachfolgenden Kacheln verfügbar sind, Reservieren durch den Steuerserver der mehreren nachfolgenden Kacheln für das Fahrzeug und anschließend Bewegung des Fahrzeugs entlang der für das Fahrzeug bestimmten Bewegungsbahn, sodass die mehreren nachfolgenden Kacheln besetzt werden.

7. Verfahren nach einem der vorstehenden Ansprüche, wobei der zentrale Steuerserver eine Bibliothek aus mehreren Bahnsegmenten innerhalb des Bewegungsbereichs umfasst, und umfassend den Schritt des Bestimmens, durch den zentralen Steuerserver, einer Bewegungsbahn für das Fahrzeug, wobei der zentrale Steuerserver dabei die Bibliothek verwendet, sodass die Bewegungsbahn zumindest teilweise, vorzugsweise vollständig, durch ein einzelnes Bahnsegment ausgebildet ist oder aus benachbarten Bahnsegmenten konstruiert ist.

8. Verfahren nach einem der vorstehenden Ansprüche, wobei das Verfahren die folgenden Schritte umfasst:
- Beladen eines Fahrzeugs mit einem Produkt, das in der für das Fahrzeug bestimmten Bewegungsbahn zu transportieren ist, vorzugsweise an der Startposition der Bewegungsbahn und/oder
- Entladen des Fahrzeugs in der für das Fahrzeug bestimmten Bewegungsbahn, vorzugsweise an der Endposition der Bewegungsbahn.

9. Verfahren nach einem der vorstehenden Ansprüche, wobei jede der benachbarten Kacheln einen Bereich aufweist oder bedeckt.

10. Verfahren nach einem der vorstehenden Ansprüche, wobei das Verfahren folgenden Schritt umfasst
- Aufteilen des Bewegungsbereichs in Kacheln durch den zentralen Steuerserver.

11. System zur Implementierung eines Verfahrens nach einem der vorstehenden Ansprüche, umfassend
- mehrere Fahrzeuge (5a, 5b, 6), wobei jedes Fahrzeug dazu ausgelegt ist, sich über einen Boden in einem Bewegungsbereich zu bewegen, und dazu ausgelegt ist, mindestens ein zu transportierendes Produkt zu tragen;
- einen zentralen Steuerserver, der dazu ausgelegt ist, die Fahrzeuge zu steuern, wobei der zentrale Steuerserver eine digitale Darstellung des Bewegungsbereichs umfasst, wobei die Darstellung mehrere benachbarte Kacheln (4, 4', 4") umfasst;
wobei der zentrale Steuerserver und die Fahrzeuge ferner zu Folgendem ausgelegt sind
- Empfangen oder Erzeugen, durch den zentralen Steuerserver, eines Befehls, ein Fahrzeug in dem Bewegungsbereich von einer Startposition des Fahrzeugs zu einer Endposition zu bewegen,
- Bestimmen, durch den zentralen Steuerserver, als Reaktion auf den Befehl, unabhängig von den Kacheln entsprechend der digitalen Darstellung, einer Bewegungsbahn (7, 8) des Fahrzeugs, wobei sich die Bewegungsbahn von der Startposition zur Endposition erstreckt,
- nachdem die Bewegungsbahn vom zentralen Steuerserver bestimmt wurde, Bestimmen durch den zentralen Steuerserver, welche benachbarten Kacheln bei der Bewegung des Fahrzeugs entlang der Bewegungsbahn von dem jeweiligen Fahrzeug besetzt werden,
- Empfangen oder Erzeugen, durch den zentralen Steuerserver, einer Anfrage zur Ausführung eines nächsten Schritts durch ein Fahrzeug, um mindestens eine nachfolgende Kachel in der für das Fahrzeug bestimmten Bewegungsbahn zu reservieren;
- zumindest unter der Bedingung, dass vom Steuerserver bestimmt wurde, dass die mindestens eine nachfolgende Kachel verfügbar ist, Reservieren, durch den Steuerserver, der mindestens einen nachfolgenden Kachel für das Fahrzeug und anschließend Bewegung des Fahrzeugs entlang der durch das Fahrzeug bestimmten Bewegungsbahn, sodass die mindestens eine nachfolgende Kachel besetzt wird,
- nachdem ein Fahrzeug eine für das Fahrzeug reservierte Kachel vollständig überfahren hat, Entfernen der Reservierung durch den zentralen Steuerserver,
**dadurch gekennzeichnet, dass** die Kacheln virtuelle Kacheln sind.

12. System nach Anspruch 11, wobei jede der benachbarten Kacheln einen Bereich aufweist oder bedeckt.

13. System nach Anspruch 11 oder 12, wobei der zentrale Steuerserver dazu ausgelegt ist, den Bewegungsbereich in Kacheln aufzuteilen.

## Revendications

1. Procédé de mise en œuvre d'un système de transport de produits, ledit système comprenant
- une pluralité de véhicules (5a, 5b, 6), dans lequel chaque véhicule est configuré pour se déplacer sur un sol dans une zone de déplacement et est configuré pour porter au moins un produit à transporter ;
- un serveur central de commande configuré pour commander les véhicules, dans lequel le serveur central de commande comprend une représentation numérique de la zone de déplacement, ladite représentation comprenant une pluralité de tuiles contiguës (4, 4', 4") ;
dans lequel le procédé comprend les étapes de :
- réception ou génération, par le serveur central de commande, d'un ordre de déplacement d'un véhicule dans la zone de déplacement d'une position de départ du véhicule à une position d'arrivée ;
- détermination, par le serveur central de commande, en réaction à l'ordre, indépendamment des tuiles conformément à la représentation numérique, d'un chemin de déplacement (7, 8) pour le véhicule, ledit chemin de déplacement s'étendant de la position de départ à la position d'arrivée ;
- après détermination du chemin de déplacement pour le véhicule par le serveur central de commande, détermination, par le serveur central de commande, quelles tuiles contiguës seront occupées par le véhicule respectif pendant le déplacement du véhicule le long du chemin de déplacement ;
- réception ou génération, par le serveur central de commande, d'une demande d'exécution d'une étape suivante par le véhicule pour réserver au moins une tuile successive dans le chemin de déplacement déterminé pour le véhicule ;
- au moins à condition qu'il ait été déterminé par le serveur de commande que l'au moins une tuile successive est disponible, réservation, par le serveur de commande, de l'au moins une tuile successive pour le véhicule, puis déplacement du véhicule le long du chemin de déplacement déterminé pour le véhicule pour que l'au moins une tuile successive soit occupée,
- après qu'un véhicule a complètement dépassé une tuile réservée pour ce véhicule, suppression de la réservation par le serveur central de commande,
**caractérisé en ce que** lesdites tuiles sont des tuiles virtuelles.

2. Procédé selon la revendication 1, dans lequel au moins deux véhicules parmi la pluralité de véhicules diffèrent l'un de l'autre par la forme et/ou la taille et/ou leurs dispositifs d'entraînement et/ou leurs dispositifs de commande.

3. Procédé selon l'une des revendications précédentes, dans lequel la forme et les dimensions d'au moins une tuile, de préférence de la plus grande proportion du nombre de tuiles, plus préférablement de toutes les tuiles, sont telles qu'au moins un des véhicules, de préférence chaque véhicule, ne s'adapte pas à l'intérieur du périmètre de l'au moins une tuile.

4. Procédé selon l'une des revendications précédentes, dans lequel au moins deux tuiles parmi la pluralité de tuiles diffèrent l'une de l'autre par la forme et/ou la taille.

5. Procédé selon la revendication 4, dans lequel deux tuiles qui diffèrent l'une de l'autre par la forme et/ou la taille ne sont pas adjacentes à un bord de la zone de déplacement.

6. Procédé selon l'une des revendications précédentes, comprenant :
- la réception ou la génération, par le serveur central de commande, d'une demande de réalisation d'une étape suivante pour réserver plusieurs tuiles successives dans le chemin de déplacement déterminé pour le véhicule,
- au moins à condition qu'il ait été déterminé par le serveur de commande que la pluralité de tuiles successives sont disponibles, la réservation, par le serveur de commande, de la pluralité de tuiles successives pour le véhicule, puis le déplacement du véhicule le long du chemin de déplacement déterminé pour le véhicule de sorte que la pluralité de tuiles successives soient occupées.

7. Procédé selon l'une des revendications précédentes, dans lequel le serveur central de commande comprend une bibliothèque du nombre de segments de chemin dans la zone de déplacement et comprend l'étape de détermination, par le serveur central de commande, d'un chemin de déplacement pour le véhicule, en utilisant, par le serveur central de commande, la bibliothèque de sorte que le chemin de déplacement soit formé au moins en partie, de préférence complètement, par un seul segment de chemin ou soit construit à partir de segments de chemin contigus.

8. Procédé selon l'une des revendications précédentes, dans lequel le procédé comprend les étapes de :
- chargement d'un véhicule avec un produit à transporter dans le chemin de déplacement déterminé pour le véhicule, de préférence à la position de départ pour le chemin de déplacement, et/ou
- déchargement du véhicule dans le chemin de déplacement déterminé pour le véhicule, de préférence à la position d'arrivée pour le chemin de déplacement.

9. Procédé selon l'une des revendications précédentes, dans lequel chacune des tuiles contiguës a ou couvre une surface.

10. Procédé selon l'une des revendications précédentes, dans lequel le procédé comprend l'étape de :
- division, par le serveur central de commande, de la zone de déplacement en tuiles.

11. Système pour la mise en œuvre d'un procédé selon l'une des revendications précédentes, comprenant :
- une pluralité de véhicules (5a, 5b, 6), dans lequel chaque véhicule est configuré pour se déplacer sur un sol dans une zone de déplacement et est configuré pour porter au moins un produit à transporter ;
- un serveur central de commande configuré pour commander les véhicules, dans lequel le serveur central de commande comprend une représentation numérique de la zone de déplacement, ladite représentation comprenant une pluralité de tuiles contiguës (4, 4', 4") ;
dans lequel le serveur central de commande et les véhicules sont en outre configurés pour :
- recevoir ou générer, par le serveur central de commande, un ordre de déplacement d'un véhicule dans la zone de déplacement d'une position de départ du véhicule à une position d'arrivée ;
- déterminer, par le serveur central de commande, en réaction à l'ordre, indépendamment des tuiles conformément à la représentation numérique, un chemin de déplacement (7, 8) pour le véhicule, ledit chemin de déplacement s'étendant de la position de départ à la position d'arrivée,
- après que le chemin de déplacement a été déterminé par le serveur central de commande, déterminer, par le serveur central de commande, quelles tuiles contiguës seront occupées par le véhicule en question pendant le déplacement par le véhicule le long du chemin de déplacement,
- recevoir ou générer, par le serveur central de commande, une demande d'exécution d'une étape suivante par un véhicule pour réserver au moins une tuile successive dans le chemin de déplacement déterminé pour le véhicule;
- au moins à condition qu'il ait été déterminé par le serveur de commande que l'au moins une tuile successive est disponible, réserver, par le serveur de commande, l'au moins une tuile successive pour le véhicule, puis déplacer le véhicule le long du chemin de déplacement déterminé par le véhicule afin que l'au moins une tuile successive soit occupée,
- après qu'un véhicule a complètement dépassé une tuile réservée pour ce véhicule, supprimer la réservation par le serveur central de commande,
**caractérisé en ce que** lesdites tuiles sont des tuiles virtuelles.

12. Système selon la revendication 11, dans lequel chacune des tuiles contiguës a ou couvre une surface.

13. Système selon la revendication 11 ou 12, dans lequel le serveur central de commande est configuré pour diviser la zone de déplacement en tuiles.
